# EUROPEAN PATENT APPLICATION

(11) **EP 3 089 404 A1**
(43) Date of publication of application: **02.11.2016**
(21) Application number: 13900456.8
(22) Date of filing: 24.12.2013
(51) Int. Cl.: H04L 12/58

(54) **SERVER AND USER GROUP MANAGEMENT METHOD**

(71) Applicant: Yulong Computer Telecommunication Scientific (Shenzhen) Co. Ltd., Shenzhen, Guangdong 518057 (CN)
(72) Inventor: CHENG, Lixing, Shenzhen Guangdong 518057 (CN); MA, Hongyao, Shenzhen Guangdong 518057 (CN)
(74) Representative: DREISS Patentanwälte PartG mbB
(86) International application number: PCT/CN2013/090345
(87) International publication number: WO 2015/096039

(57) **Abstract**

The present invention provides a server and a user group management method. The server comprises: an obtaining unit, used for obtaining a user group table configured by a user, wherein the user group table comprises multiple users and at least one user group associated with each user among the multiple users; and a processing unit, used for processing each group member of each user group among multiple user groups according to the at least one user group associated with each user in the user group table, wherein the multiple user groups comprise the at least one user group. By using the technical solutions of the present invention, a group member can be automatically added or deleted according to a user group table configured by a user, thereby facilitating operations of the user, and improving the efficiency of group management.

## Description

### Field of the Invention

The present invention relates to the technical field of communications, and specifically relates to a server and a user group management method.

### Background of the Invention

At present, enterprises or organizations communicate by using the group chat feature of social networking applications frequently. And using chat groups to communicate allows organizing meetings on line at any time, thus facilitating timely communication and information sharing among internal employees, corporate culture propaganda and the like, and can improve the working efficiency.

However, when the enterprises use the group chat feature, there may be a problem that users of the chat groups are not updated in time, for example, a new employee can join a chat group only by applying for it or being invited by a group advocate; after the resignation, the employee needs to be removed from the chat groups for information security, and the workload of removing operation is heavy if the employee joined multiple chat groups before.

Thus, how to realize automatic update of group members so as to improve the efficiency of group management has become a technical problem urgently to be solved.

### Summary of the Invention

Just based on at least one of the above technical problems, the present invention provides a novel user group management technology, which can automatically add or delete a group member in a user group according to a user group table configured by a user, thereby facilitating operations of the user, and improving the efficiency of group management.

In view of this, the present invention provides a server, including: an obtaining unit, used for obtaining a user group table configured by a user, wherein the user group table comprises multiple users and at least one user group associated with each user among the multiple users; and a processing unit, used for processing each group member of each user group among multiple user groups according to the at least one user group associated with each user in the user group table, wherein the multiple user groups comprise the at least one user group.

In the technical solution, each group member of each user group among the multiple user groups is processed according to the at least one user group associated with each user in the user group table, so that the operations of adding and deleting a group member can be automatically completed without application by the group member or invitation by a group advocate to join; and when a specified group member is to be deleted, the group member does not need to be searched from the multiple user groups, so that the operations of the user are facilitated and the efficiency of group management is improved.

Specifically, for example, when a new employee enters an enterprise, the new employee needs to apply for joining an enterprise group himself or be invited by a group advocate to join, and there may be the problem of joining not timely; when an employee quits, the group advocate needs to delete the employee from the enterprise group, and if the employee is in multiple enterprise groups, the deleting workload is heavy, which is not conducive to the management of the enterprise groups. In order to facilitate the management of enterprise groups, an employee group table can be configured, and each group member in the enterprise groups is managed (deleted or added and the like) by reading the user groups associated with each employee in the employee group table.

In the above technical solution, preferably, the processing unit includes: a detection unit, used for detecting whether the user groups associated with each user in the user group table are changed; and an updating unit, used for updating each group member of the user groups associated with a specified user when the detection unit detects that the user groups associated with the specified user in the user group table are changed. In the technical solution, when the user groups associated with the specified user in the user group table are changed, each group member of the user groups associated with the specified user is updated, so that when a group member in the user groups needs to be changed, only the user groups of the user in the user group table need to be modified, and the modification can be synchronized to the user groups, so that the operation processes of the user are facilitated and the efficiency of group management is improved. Specifically, for example, the user groups associated with a user 1 are user group A and user group B, the user groups associated with a user 2 are user group B and user group C, and if the user 1 needs to be deleted from all the user groups including the user 1, only the user group table needs to be configured, thus avoiding the complicated operations of searching the user groups including the user 1 first and then deleting the user 1 from the searched user groups.

In the above technical solution, preferably, the user group table further includes authority information of each user in the user groups associated with the user; the processing unit is further used for: according to the authority information of each user in the user groups associated with the user, setting an authority for each group member in each user group.

In relevant technologies, only the same authority (e.g. authority for accessing group information) can be set for group members in the same user group, but an authority cannot be respectively set for each group member. However, in the technical solution, an authority is set for each group member in each user group according to the authority information of each user in the user groups associated with the user, so that a different authority can be set for each user in the user group table, each group member has a different authority in the same user group, for example, the user 1 only has the authority of copying and forwarding group information, while the user 2 only has the authority of viewing the group information and the like, and then the controllability of group management is improved.

In the above technical solution, preferably, the server further includes: an interaction unit, used for sending a request for establishing the multiple user groups to another server, and sending basic information of the multiple user groups to the another server, so that the multiple user groups are managed by the another server.

In the technical solution, specifically, the basic information may be the name of a user group, the number of group members of a user group and the like. The server in an enterprise manages data information of the enterprise, basic information of group members and the like, while the another server may be a group management server, and when the basic information of the user groups is sent to the group management server, the group management server can manage the user groups according to the basic information of the user groups on the one hand, and enterprise data is prevented from being divulged when being sent to the group management server on the other hand.

In the above technical solution, preferably, the interaction unit is used for: receiving an access request, forwarded by the another server, of a terminal for accessing a specified user group in the multiple user groups, and sending a response result of a response unit with regard to the access request to the another server, so that the response result is sent to the terminal by the another server; and the response unit is used for responding to the access request received by the interaction unit.

In the technical solution, the server in the enterprise manages the data information of the enterprise, the another server may be a group management server, the terminal interacts with the group management server, and the group management server interacts with the server in the enterprise, so that divulgence of enterprise data occurring when the terminal directly accesses the server in the enterprise can be avoided.

In the above technical solution, preferably, the server further includes: a determining unit, used for determining whether the user corresponding to the terminal has an authority of accessing the specified user group; the response unit is specifically used for: when the determining unit determines that the user corresponding to the terminal has the authority of accessing the specified user group, authorizing the terminal and returning data accessed by the terminal, and when the determining unit determines that the user corresponding to the terminal does not have the authority of accessing the specified user group, returning access failure information.

In the technical solution, a response may be made to the corresponding access request according to the authority of each user by determining the authority of the user corresponding to the terminal, thus preventing a low-authority user from accessing high-authority data, and ensuring the security of the data.

According to another aspect of the present invention, further provided is a server, including: an interaction unit, used for receiving a request for establishing multiple user groups and basic information of the multiple user groups sent by another server, receiving an access request of a terminal for accessing a specified user group in the server, and forwarding the access request to the another server when a determining unit determines that the specified user group is a user group in the multiple user groups, so that the another server responds to the access request; an establishment unit, used for establishing the multiple user groups according to the request received by the interaction unit for establishing the multiple user groups; and the determining unit, used for determining whether the specified user group is a user group among the multiple user groups.

In the technical solution, the another server may be a server in an enterprise, the established multiple user groups may be secure groups in the enterprise, and the multiple user groups are established according to the received request sent by the another server for establishing the multiple user groups and the basic information of the multiple user groups, so that the user groups in the enterprise can be managed according to the established multiple user groups. A response may be made to the corresponding server allocated to different user groups accessed by the terminal through determining whether the user groups accessed by the terminal are secure groups in the enterprise, that is, a response is made to the server allocated to the secure groups in the enterprise, then the secure groups in the enterprise are managed by the server in the enterprise, and a response is made to the access request, so that divulgence of data in the enterprise is avoided and the security of the data in the enterprise is improved.

In the above technical solution, preferably, the interaction unit is further used for: receiving a response result of the another server with regard to the access request, and sending the response result to the terminal.

In the technical solution, the group management server manages the basic information of the user groups, the another server may be a server in the enterprise and is used for managing the data information of the enterprise, the terminal interacts with the group management server, and the group management server interacts with the server in the enterprise, so that divulgence of enterprise data occurring when the terminal directly accesses the server in the enterprise can be avoided.

According to another aspect of the present invention, further provided is a user group management method, including: obtaining a user group table configured by a user, wherein the user group table comprises multiple users and at least one user group associated with each user among the multiple users; and according to the at least one user group associated with each user in the user group table, processing each group member of each user group among multiple user groups, wherein the multiple user groups comprise the at least one user group.

In the technical solution, each group member of each user group among the multiple user groups is processed according to the at least one user group associated with each user in the user group table, so that the operations of adding and deleting a group member can be automatically completed without application by the group member or invitation by a group advocate to join; and when a specified group member is to be deleted, the group member does not need to be searched from the multiple user groups, so that the operations of the user are facilitated and the efficiency of group management is improved.

Specifically, for example, when a new employee enters an enterprise, the new employee needs to apply for joining an enterprise group himself or be invited by a group advocate to join, and there may be the problem of joining not timely; when an employee quits, the group advocate needs to delete the employee from the enterprise group, and if the employee is in multiple enterprise groups, the deleting workload is heavy, which is not conducive to the management of the enterprise groups. In order to facilitate the management of enterprise groups, an employee group table can be configured, and each group member in the enterprise groups is managed (deleted or added and the like) by reading the user groups associated with each employee in the employee group table.

In the above technical solution, preferably, the step of processing each group member of each user group among multiple user groups including the at least one user group according to the at least one user group associated with each user in the user group table includes: detecting whether the user groups associated with each user in the user group table are changed; and when that the user groups associated with a specified user in the user group table are changed is detected, updating each group member of the user groups associated with the specified user.

In the technical solution, when the user groups associated with the specified user in the user group table are changed, each group member of the user groups associated with the specified user is updated, so that when a group member in the user groups needs to be changed, only the user groups of the user in the user group table need to be modified, and the modification can be synchronized to the user groups, so that the operation processes of the user are facilitated and the efficiency of group management is improved. Specifically, for example, the user groups associated with a user 1 are user group A and user group B, the user groups associated with a user 2 are user group B and user group C, and if the user 1 needs to be deleted from all the user groups including the user 1, only the user group table needs to be configured, thus avoiding the complicated operations of searching the user groups including the user 1 first and then deleting the user 1 from the searched user groups.

In the above technical solution, preferably, the user group table further includes authority information of each user in the user groups associated with the user; the user group management method further includes: according to the authority information of each user in the user groups associated with the user, setting an authority for each group member in each user group.

In relevant technologies, only the same authority (e.g. authority for accessing group information) can be set for group members in the same user group, but an authority cannot be respectively set for each group member. However, in the technical solution, an authority is set for each group member in each user group according to the authority information of each user in the user groups associated with the user, so that a different authority can be set for each user in the user group table, each group member has a different authority in the same user group, for example, the user 1 only has the authority of copying and forwarding group information, while the user 2 only has the authority of viewing the group information and the like, and then the controllability of group management is improved.

In the above technical solution, preferably, the method further includes: sending a request for establishing the multiple user groups to another server; and sending basic information of the multiple user groups to the another server, so that the another server manages the multiple user groups.

In the technical solution, specifically, the basic information may be the name of a user group, the number of group members of a user group and the like. The server in an enterprise manages data information of the enterprise, basic information of group members and the like, while the another server may be a group management server, and when the basic information of the user groups is sent to the group management server, the group management server can manage the user groups according to the basic information of the user groups on the one hand, and enterprise data is prevented from being divulged when being sent to the group management server on the other hand.

In the above technical solution, preferably, the method further includes: receiving an access request, forwarded by the another server, of a terminal for accessing a specified user group in the multiple user groups, and responding to the access request; and sending a response result of the access request to the terminal.

In the technical solution, the server in the enterprise manages the data information of the enterprise, the another server may be a group management server, the access request of the terminal is sent to the server in the enterprise by the group management server, so that the server in the enterprise responds to the access request, the group management server can check whether the access request of the terminal is a secure one, and when the access request is the secure one, the server in the enterprise interacts with the terminal, thus avoiding divulgence of the data in the enterprise occurring when the terminal directly accesses the server in the enterprise.

In the above technical solution, preferably, the method further includes: receiving an access request, forwarded by the another server, of a terminal for accessing a specified user group in the multiple user groups, and responding to the access request; and sending a response result of the access request to the another server, so that the another server sends the response result to the terminal.

In the technical solution, the server in the enterprise manages the data information of the enterprise, the another server may be a group management server, the terminal interacts with the group management server, and the group management server interacts with the server in the enterprise, so that divulgence of enterprise data occurring when the terminal directly accesses the server in the enterprise can be avoided.

In the above technical solution, preferably, responding to the access request specifically comprises: determining whether the user corresponding to the terminal has an authority of accessing the specified user group; if the user corresponding to the terminal has the authority of accessing the specified user group, authorizing the terminal and returning data accessed by the terminal; otherwise, returning access failure information.

In the technical solution, a response may be made to the corresponding access request according to the authority of each user by determining the authority of the user corresponding to the terminal, thus preventing a low-authority user from accessing high-authority data, and ensuring the security of the data.

According to another aspect of the present invention, further provided is a user group management method, including: when receiving a request for establishing multiple user groups and basic information of the multiple user groups sent by another server, establishing the multiple user groups; receiving an access request of a terminal for accessing a specified user group in the server; determining whether the specified user group is a user group among the multiple user groups, and if so, forwarding the access request to the another server, so that the another server responds to the access request. In the technical solution, the another server may be a server in an enterprise, the established multiple user groups may be secure groups in the enterprise, and the multiple user groups are established according to the received request sent by the another server for establishing the multiple user groups and the basic information of the multiple user groups, so that the user groups in the enterprise can be managed according to the established multiple user groups. A response may be made to the corresponding server allocated to different user groups accessed by the terminal through determining whether the user groups accessed by the terminal are secure groups in the enterprise, that is, a response is made to the server allocated to the secure groups in the enterprise, then the secure groups in the enterprise are managed by the server in the enterprise, and a response is made to the access request, so that divulgence of data in the enterprise is avoided and the security of the data in the enterprise is improved.

In the above technical solution, preferably, the method further includes: receiving a response result of the another server with regard to the access request, and sending the response result to the terminal.

In the technical solution, the group management server manages the basic information of the user groups, the another server may be a server in the enterprise and is used for managing the data information of the enterprise, the terminal interacts with the group management server, and the group management server interacts with the server in the enterprise, so that divulgence of enterprise data occurring when the terminal directly accesses the server in the enterprise can be avoided.

Through the above technical solutions, a group member in a user group can be automatically added or deleted according to a user group table configured by a user, thereby facilitating operations of the user, and improving the efficiency of group management.

### Brief Description of the Drawings

Fig. 1 shows a schematic block diagram of a server according to an embodiment of the present invention;
Fig. 2 shows a schematic block diagram of a server according to another embodiment of the present invention;
Fig. 3 shows a schematic flow diagram of a user group management method according to an embodiment of the present invention;
Fig. 4 shows a schematic flow diagram of a user group management method according to another embodiment of the present invention;
Fig. 5 shows a schematic diagram of an interaction process of a terminal, a group management server and an enterprise data server according to an embodiment of the present invention;
Fig. 6 shows a schematic flow diagram of a user group management method according to a further embodiment of the present invention.

### Detailed Description of the Embodiments

In order to understand the above objects, features and advantages of the present invention more clearly, the present invention will be further described in detail below in conjunction with the accompanying drawings and specific embodiments. It should be noted that the embodiments of the present application and the features in the embodiments can be combined with each other without conflicts.

Many specific details are set forth in the description below for sufficiently understanding the present invention, but the present invention may be further implemented by adopting other ways different from those described herein, so the protection scope of the present invention is not limited by the specific embodiments disclosed below.

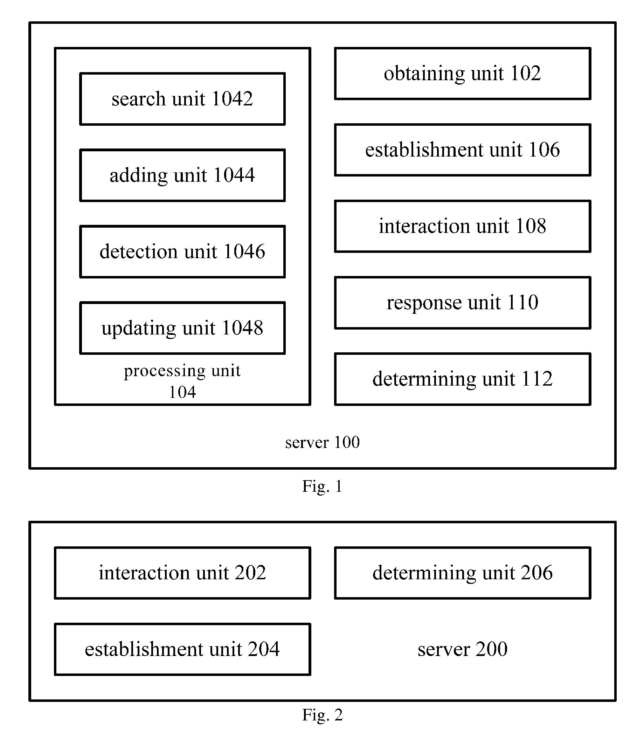

Fig. 1 shows a schematic block diagram of a server according to an embodiment of the present invention.

As shown in Fig. 1, a server 100 according to an embodiment of the present invention includes: an obtaining unit 102, used for obtaining a user group table configured by a user, wherein the user group table comprises multiple users and at least one user group associated with each user among the multiple users; and a processing unit 104, used for processing each group member of each user group among multiple user groups according to the at least one user group associated with each user in the user group table, wherein the multiple user groups comprise the at least one user group.

In the technical solution, each group member of each user group among the multiple user groups is processed according to the at least one user group associated with each user in the user group table, so that the operations of adding and deleting a group member can be automatically completed without application by the group member or invitation by a group advocate to join; and when a specified group member is to be deleted, the group member does not need to be searched from the multiple user groups, so that the operations of the user are facilitated and the efficiency of group management is improved.

Specifically, for example, when a new employee enters an enterprise, the new employee needs to apply for joining an enterprise group himself or be invited by a group advocate to join, and there may be the problem of joining not timely; when an employee quits, the group advocate needs to delete the employee from the enterprise group, and if the employee is in multiple enterprise groups, the deleting workload is heavy, which is not conducive to the management of the enterprise groups. In order to facilitate the management of enterprise groups, an employee group table can be configured, and each group member in the enterprise groups is managed (deleted or added and the like) by reading the user groups associated with each employee in the employee group table.

In the above technical solution, preferably, the server further includes: an establishment unit 106, used for establishing the multiple user groups according to the number of the user groups associated with the multiple users.

In the technical solution, the multiple user groups are established according to the number of the user groups associated with the multiple users, so that the establishment process of the user groups is more flexible and the intelligence of user group management is improved. Specifically, for example, the user groups associated with a user 1 are user group A and user group B, the user groups associated with a user 2 are user group B and user group C, and then three user groups can be established, namely user group A, user group B and user group C.

In the above technical solution, preferably, the processing unit 104 includes: a search unit 1042, used for searching the user associated with each user group from the user group table; and an adding unit 1044, used for adding the user searched by the search unit 1042 and associated with the specified user group to the specified user group.

In the technical solution, specifically, for example, the user groups associated with a user 1 are user group A and user group B, the user groups associated with a user 2 are user group B and user group C, then the user 1 can be added to the user group A as a group member of the user group A, similarly, the user 1 and the user 2 can be added to the user group B, and the user 2 can be added to the user group C.

In the above technical solution, preferably, the processing unit 104 further includes: a detection unit 1046, used for detecting whether the user groups associated with each user in the user group table are changed; and an updating unit 1048, used for updating each group member of the user groups associated with a specified user when the detection unit 1046 detects that the user groups associated with the specified user in the user group table are changed.

In the technical solution, when the user groups associated with the specified user in the user group table are changed, each group member of the user groups associated with the specified user is updated, so that when a group member in the user groups needs to be changed, only the user groups of the user in the user group table need to be modified, and the modification can be synchronized to the user groups, so that the operation processes of the user are facilitated and the efficiency of group management is improved. Specifically, for example, the user groups associated with a user 1 are user group A and user group B, the user groups associated with a user 2 are user group B and user group C, and if the user 1 needs to be deleted from all the user groups including the user 1, only the user group table needs to be configured, thus avoiding the complicated operations of searching the user groups including the user 1 first and then deleting the user 1 from the searched user groups.

In the above technical solution, preferably, the user group table further includes display attribute information of each user in each user group among the at least one user group; the processing unit 104 is further used for: according to the display attribute information of each group member of each user group among the multiple user groups, processing each group member of each user group among the multiple user groups.

In the technical solution, each group member of each user group among the multiple user groups is processed according to the display attribute information of each group member of each user group, so that each user in each user group can be conveniently managed by configuring the user group table. Specifically, for example, the user groups associated with a user 1 are user group A and user group B, and if the user 1 needs to be concealed in the user group A, that is, the user 1 is not displayed in the user group A, the display attribute of the user 1 in the user group A can be configured as concealment attribute, so that the management of the user groups is more flexible. In the above technical solution, preferably, the user group table further includes authority information of each user in the user groups associated with the user; the processing unit 104 is further used for: according to the authority information of each user in the user groups associated with the user, setting an authority for each group member in each user group.

In relevant technologies, only the same authority (e.g. authority for accessing group information) can be set for group members in the same user group, but an authority cannot be respectively set for each group member. However, in the technical solution, an authority is set for each group member in each user group according to the authority information of each user in the user groups associated with the user, so that a different authority can be set for each user in the user group table, each group member has a different authority in the same user group, for example, the user 1 only has the authority of copying and forwarding group information, while the user 2 only has the authority of viewing the group information and the like, and then the controllability of group management is improved.

In the above technical solution, preferably, the server further includes: an interaction unit 108, used for sending a request for establishing the multiple user groups to another server, and sending basic information of the multiple user groups to the another server, so that the multiple user groups are managed by the another server.

In the technical solution, specifically, the basic information may be the name of a user group, the number of group members of a user group and the like. The server in an enterprise manages data information of the enterprise, basic information of group members and the like, while the another server may be a group management server, and when the basic information of the user groups is sent to the group management server, the group management server can manage the user groups according to the basic information of the user groups on the one hand, and enterprise data is prevented from being divulged when being sent to the group management server on the other hand.

In the above technical solution, preferably, the interaction unit 108 is further used for: receiving an access request, forwarded by the another server, of a terminal for accessing a specified user group in the multiple user groups, and sending a response result of a response unit 110 with regard to the access request to the terminal; and the response unit 110 is used for responding to the access request received by the interaction unit 108.

In the technical solution, the server in the enterprise manages the data information of the enterprise, the another server may be a group management server, the access request of the terminal is sent to the server in the enterprise by the group management server, so that the server in the enterprise responds to the access request, the group management server can check whether the access request of the terminal is a secure one, and when the access request is the secure one, the server in the enterprise interacts with the terminal, thus avoiding divulgence of the data in the enterprise occurring when the terminal directly accesses the server in the enterprise.

In the above technical solution, preferably, the interaction unit 108 is further used for: receiving an access request, forwarded by the another server, of a terminal for accessing a specified user group in the multiple user groups, and sending a response result of the response unit 110 with regard to the access request to the another server, so that the response result is sent to the terminal by the another server; and the response unit 110 is used for responding to the access request received by the interaction unit 108.

In the technical solution, the server in the enterprise manages the data information of the enterprise, the another server may be a group management server, the terminal interacts with the group management server, and the group management server interacts with the server in the enterprise, so that enterprise data can be prevented from being divulged when the terminal directly accesses the server in the enterprise. In the above technical solution, preferably, the server further includes: a determining unit 112, used for determining whether the user corresponding to the terminal has an authority of accessing the specified user group; the response unit 110 is specifically used for: when the determining unit 112 determines that the user corresponding to the terminal has the authority of accessing the specified user group, authorizing the terminal and returning data accessed by the terminal, and when the determining unit 112 determines that the user corresponding to the terminal does not have the authority of accessing the specified user group, returning access failure information.

In the technical solution, a response may be made to the corresponding access request according to the authority of each user by determining the authority of the user corresponding to the terminal, thus preventing a low-authority user from accessing high-authority data, and ensuring the security of the data.

Fig. 2 shows a schematic block diagram of a server according to another embodiment of the present invention.

As shown in Fig. 2, a server 200 according to another embodiment of the present invention includes: an interaction unit 202, used for receiving a request for establishing multiple user groups and basic information of the multiple user groups sent by another server, receiving an access request of a terminal for accessing a specified user group in the server, and forwarding the access request to the another server when a determining unit 206 determines that the specified user group is a user group in the multiple user groups, so that the another server responds to the access request; an establishment unit 204, used for establishing the multiple user groups according to the request received by the interaction unit 202 for establishing the multiple user groups; and the determining unit 206, used for determining whether the specified user group is a user group among the multiple user groups.

In the technical solution, the another server may be a server in an enterprise, the established multiple user groups may be secure groups in the enterprise, and the multiple user groups are established according to the received request sent by the another server for establishing the multiple user groups and the basic information of the multiple user groups, so that the user groups in the enterprise can be managed according to the established multiple user groups. A response may be made to the corresponding server allocated to different user groups accessed by the terminal through determining whether the user groups accessed by the terminal are secure groups in the enterprise, that is, a response is made to the server allocated to the secure groups in the enterprise, then the secure groups in the enterprise are managed by the server in the enterprise, and a response is made to the access request, so that divulgence of data in the enterprise is avoided and the security of the data in the enterprise is improved.

In the above technical solution, preferably, the interaction unit 202 is further used for: receiving a response result of the another server with regard to the access request, and sending the response result to the terminal.

In the technical solution, the group management server manages the basic information of the user groups, the another server may be a server in the enterprise and is used for managing the data information of the enterprise, the terminal interacts with the group management server, and the group management server interacts with the server in the enterprise, so that enterprise data can be prevented from being divulged when the terminal directly accesses the server in the enterprise.

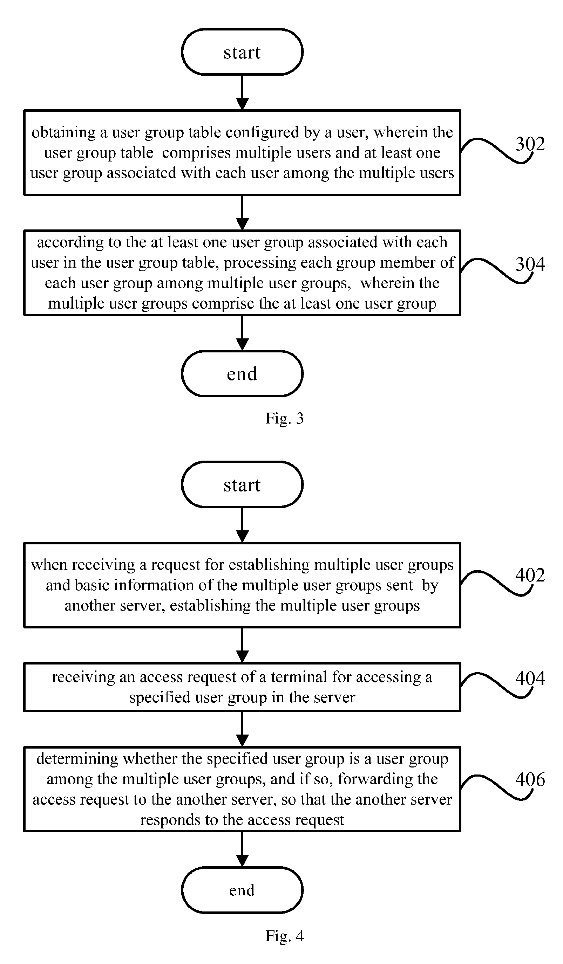

Fig. 3 shows a schematic flow diagram of a user group management method according to an embodiment of the present invention.

As shown in Fig. 3, a user group management method according to an embodiment of the present invention includes: step 302, obtaining a user group table configured by a user, wherein the user group table comprises multiple users and at least one user group associated with each user among the multiple users; and step 304, according to the at least one user group associated with each user in the user group table, processing each group member of each user group among multiple user groups, wherein the multiple user groups comprise the at least one user group.

In the technical solution, each group member of each user group among the multiple user groups is processed according to the at least one user group associated with each user in the user group table, so that the operations of adding and deleting a group member can be automatically completed without application by the group member or invitation by a group advocate to join; and when a specified group member is to be deleted, the group member does not need to be searched from the multiple user groups, so that the operations of the user are facilitated and the efficiency of group management is improved.

Specifically, for example, when a new employee enters an enterprise, the new employee needs to apply for joining an enterprise group himself or be invited by a group advocate to join, and there may be the problem of joining not timely; when an employee quits, the group advocate needs to delete the employee from the enterprise group, and if the employee is in multiple enterprise groups, the deleting workload is heavy, which is not conducive to the management of the enterprise groups. In order to facilitate the management of enterprise groups, an employee group table can be configured, and each group member in the enterprise groups is managed (deleted or added and the like) by reading the user groups associated with each employee in the employee group table.

In the above technical solution, preferably, before each group member of each user group among the multiple user groups including the at least one user group is processed according to the at least one user group associated with each user in the user group table, the method further includes: establishing the multiple user groups according to the number of the user groups associated with the multiple users.

In the technical solution, the multiple user groups are established according to the number of the user groups associated with the multiple users, so that the establishment process of the user groups is more flexible and the intelligence of user group management is improved. Specifically, for example, the user groups associated with a user 1 are user group A and user group B, the user groups associated with a user 2 are user group B and user group C, and then three user groups can be established, namely user group A, user group B and user group C.

In the above technical solution, preferably, the step of processing each group member of each user group among the multiple user groups including the at least one user group according to the at least one user group associated with each user in the user group table specifically comprise: searching the user associated with each user group from the user group table; and adding the searched user associated with the specified user group to the specified user group.

In the technical solution, specifically, for example, the user groups associated with a user 1 are user group A and user group B, the user groups associated with a user 2 are user group B and user group C, then the user 1 can be added to the user group A as a group member of the user group A, similarly, the user 1 and the user 2 can be added to the user group B, and the user 2 can be added to the user group C.

In the above technical solution, preferably, after the searched user associated with the specified user group is added to the specified user group, the method further includes: detecting whether the user groups associated with each user in the user group table are changed; and when that the user groups associated with a specified user in the user group table are changed is detected, updating each group member of the user groups associated with the specified user.

In the technical solution, when the user groups associated with the specified user in the user group table are changed, each group member of the user groups associated with the specified user is updated, so that when a group member in the user groups needs to be changed, only the user groups of the user in the user group table need to be modified, and the modification can be synchronized to the user groups, so that the operation processes of the user are facilitated and the efficiency of group management is improved. Specifically, for example, the user groups associated with a user 1 are user group A and user group B, the user groups associated with a user 2 are user group B and user group C, and if the user 1 needs to be deleted from all the user groups including the user 1, only the user group table needs to be configured, thus avoiding the complicated operations of searching the user groups including the user 1 first and then deleting the user 1 from the searched user groups.

In the above technical solution, preferably, the user group table further includes display attribute information of each user in each user group among the at least one user group; the user group management method further includes: according to the display attribute information of each group member of each user group among the multiple user groups, processing each group member of each user group among the multiple user groups.

In the technical solution, each group member of each user group among the multiple user groups is processed according to the display attribute information of each group member of each user group, so that each user in each user group can be conveniently managed by configuring the user group table. Specifically, for example, the user groups associated with a user 1 are user group A and user group B, and if the user 1 needs to be concealed in the user group A, that is, the user 1 is not displayed in the user group A, the display attribute of the user 1 in the user group A can be configured as concealment attribute, so that the management of the user groups is more flexible. In the above technical solution, preferably, the user group table further includes authority information of each user in the user groups associated with the user; the user group management method further includes: according to the authority information of each user in the user groups associated with the user, setting an authority for each group member in each user group.

In relevant technologies, only the same authority (e.g. authority for accessing group information) can be set for group members in the same user group, but an authority cannot be respectively set for each group member. However, in the technical solution, an authority is set for each group member in each user group according to the authority information of each user in the user groups associated with the user, so that a different authority can be set for each user in the user group table, each group member has a different authority in the same user group, for example, the user 1 only has the authority of copying and forwarding group information, while the user 2 only has the authority of viewing the group information and the like, and then the controllability of group management is improved.

In the above technical solution, preferably, the method further includes: sending a request for establishing the multiple user groups to another server; and sending basic information of the multiple user groups to the another server, so that the another server manages the multiple user groups.

In the technical solution, specifically, the basic information may be the name of a user group, the number of group members of a user group and the like. The server in an enterprise manages data information of the enterprise, basic information of group members and the like, while the another server may be a group management server, and when the basic information of the user groups is sent to the group management server, the group management server can manage the user groups according to the basic information of the user groups on the one hand, and enterprise data is prevented from being divulged when being sent to the group management server on the other hand.

In the above technical solution, preferably, the method further includes: receiving an access request, forwarded by the another server, of a terminal for accessing a specified user group in the multiple user groups, and responding to the access request; and sending a response result of the access request to the terminal.

In the technical solution, the server in the enterprise manages the data information of the enterprise, the another server may be a group management server, the access request of the terminal is sent to the server in the enterprise by the group management server, so that the server in the enterprise responds to the access request, the group management server can check whether the access request of the terminal is a secure one, and when the access request is the secure one, the server in the enterprise interacts with the terminal, thus avoiding divulgence of the data in the enterprise occurring when the terminal directly accesses the server in the enterprise.

In the above technical solution, preferably, the method further includes: receiving an access request, forwarded by the another server, of a terminal for accessing a specified user group in the multiple user groups, and responding to the access request; and sending a response result of the access request to the another server, so that the another server sends the response result to the terminal.

In the technical solution, the server in the enterprise manages the data information of the enterprise, the another server may be a group management server, the terminal interacts with the group management server, and the group management server interacts with the server in the enterprise, so that divulgence of enterprise data occurring when the terminal directly accesses the server in the enterprise can be avoided.

In the above technical solution, preferably, responding to the access request specifically comprises: determining whether the user corresponding to the terminal has an authority of accessing the specified user group; if the user corresponding to the terminal has the authority of accessing the specified user group, authorizing the terminal and returning data accessed by the terminal; otherwise, returning access failure information.

In the technical solution, a response may be made to the corresponding access request according to the authority of each user by determining the authority of the user corresponding to the terminal, thus preventing a low-authority user from accessing high-authority data, and ensuring the security of the data.

Fig. 4 shows a schematic flow diagram of a user group management method according to another embodiment of the present invention.

As shown in Fig. 4, a user group management method according to another embodiment of the present invention includes: step 402, when receiving a request for establishing multiple user groups and basic information of the multiple user groups sent by another server, establishing the multiple user groups; step 404, receiving an access request of a terminal for accessing a specified user group in the server; and step 406, determining whether the specified user group is a user group among the multiple user groups, and if so, forwarding the access request to the another server, so that the another server responds to the access request.

In the technical solution, the another server may be a server in an enterprise, the established multiple user groups may be secure groups in the enterprise, and the multiple user groups are established according to the received request sent by the another server for establishing the multiple user groups and the basic information of the multiple user groups, so that the user groups in the enterprise can be managed according to the established multiple user groups. A response may be made to the corresponding server allocated to different user groups accessed by the terminal through determining whether the user groups accessed by the terminal are secure groups in the enterprise, that is, a response is made to the server allocated to the secure groups in the enterprise, then the secure groups in the enterprise are managed by the server in the enterprise, and a response is made to the access request, so that divulgence of data in the enterprise is avoided and the security of the data in the enterprise is improved.

In the above technical solution, preferably, the method further includes: receiving a response result of the another server with regard to the access request, and sending the response result to the terminal.

In the technical solution, the group management server manages the basic information of the user groups, the another server may be a server in the enterprise and is used for managing the data information of the enterprise, the terminal interacts with the group management server, and the group management server interacts with the server in the enterprise, so that divulgence of enterprise data occurring when the terminal directly accesses the server in the enterprise can be avoided.

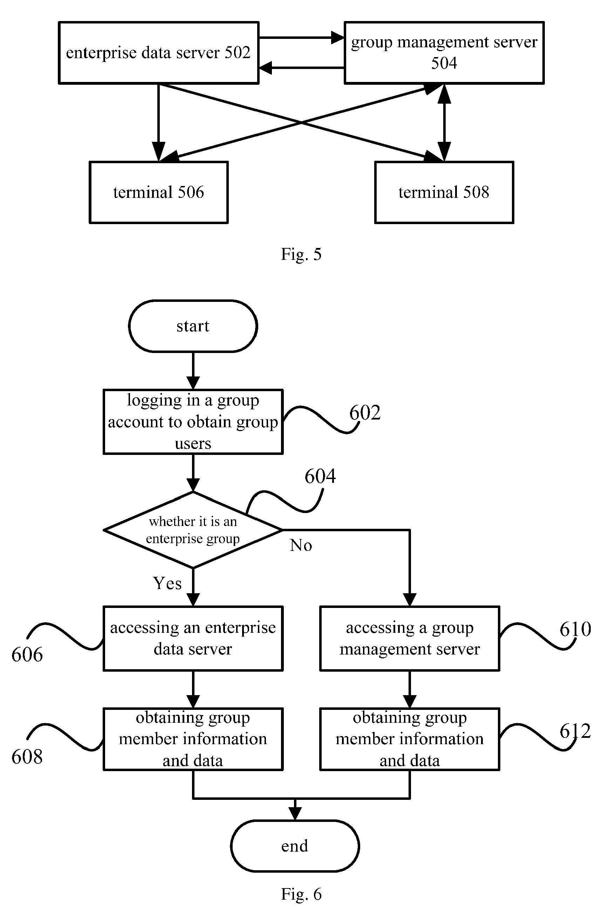

Fig. 5 shows a schematic diagram of an interaction process of a terminal, a group management server and an enterprise data server according to an embodiment of the present invention.

As shown in Fig. 5, an enterprise data server 502 is mainly used for managing public resource information of enterprise groups, e.g. group name, ID, as well as identity and authority of each member and the like. The identity and the authority correspond to each other, different identities have different authorities, the authorities manage the operation behaviors of group members, e.g. sharing, forwarding, copying and the like, a low-authority member cannot see confidential information in the group, and the same person can join in different secure groups. Table 1 is a basic information table of an enterprise group.

**Table 1**

| Name | ID | Security Level | Authority Group Member | Member ID |
|---|---|---|---|---|
| craftsman spirit group | cp54841215485 | 3 | {craftsman spirit} {manager group} {} | {224556, 254523} |

A group list and group data may be placed in a third-party enterprise, namely in the enterprise data server 502, and an enterprise group is also in the enterprise data server 502 and is used for managing the information of each member, e.g. nickname, ID, authority, etc. Table 2 is a group member information table of an enterprise group.

**Table 2**

| Nickname | ID | Authority | Authority Group |
|---|---|---|---|
| Feiyang | 224556 | 2 | craftsman spirit group |

Different authorities can be set for each member and each group.

Each group member of each group can be automatically added and deleted according to an employee group table configured by an enterprise, so that enterprise groups can be conveniently managed. An employee group table configured by an enterprise is shown as table 3:

**Table 3**

| Name | Job No. | Nickname | ID | Dept. | Post | Authority Group | Valid Time | Identity Concealment from outside |
|---|---|---|---|---|---|---|---|---|
| Zhang San | 3506 | Fengzheng | 2245 | Software | Manager | {craftsman spirit (3), software dept. (1), quality (3)} | 20130515 ∼ 20140815 | Yes |
| Wang Wu | 3508 | Canyang | 2247 | Software | Engineer | {software dept. (1), quality (3)} | 20130515 ∼ 20140815 | Yes |
| Li Si | 4806 | Luoxue | 2258 | Financial | Auditor | {financial dept. (1)} | 20130515 ∼ 20140815 | Yes |

As shown in table 3, the employee Zhang San belongs to a craftsman spirit group, a software department group and a quality group, and has a different security authority in each group, namely has authority 3 in the craftsman spirit group, authority 1 in the software department group and authority 3 in the quality group. In order to prevent the identity of an employee in the enterprise from being divulged, whether the identity is concealed from the outside can be set, and if the identity concealed from the outside is set, the identity of the employee is not displayed in a non enterprise group.

When a terminal 506 or a terminal 508 accesses a user group, it may send an access request to a group management server 504 first, thus preventing enterprise data from being divulged by directly accessing the enterprise data server 502; the group management server 504 determines whether the user group accessed by the terminal is an enterprise group, and if so, sends the access request to the enterprise data server 502, so that the enterprise data server 502 responds to the access request; after the enterprise data server 502 responds to the request, the group management server 504 may send the response result to the terminal, or the enterprise data server is directly connected with the terminal to send the response result to the terminal. The detailed flow diagram is shown in Fig. 6.

Fig. 6 shows a schematic flow diagram of a user group management method according to a further embodiment of the present invention.

As shown in Fig. 6, a user group management method according to a further embodiment of the present invention includes:
step 602, logging in a group account to obtain group users;
step 604, determining, by a group management server, whether the user group logged by a user (namely the accessed user group) is an enterprise group, if so, executing step 606, otherwise, executing step 610;
step 606, when determining that the accessed user group is an enterprise group, controlling, by the group management server, a terminal to access an enterprise data server;
step 608, obtaining group member information and data of the enterprise group;
step 610, when determining that the accessed user group is not an enterprise group (may be a common group), directly accessing, by the terminal, the group management server; and
step 612, obtaining group member information and data of the common group.

The technical solutions of the present invention are described in detail above in conjunction with the accompanying drawings. The present invention provides a novel user group management technology, in which a group member in a user group can be automatically added or deleted according to a user group table configured by a user, thereby facilitating operations of the user, and improving the efficiency of group management.

According to an implementation of the present invention, further provided is a program product stored in a nonvolatile machine readable medium and used for managing user groups, the program product including a machine executive instruction enabling a computer system to execute the following steps: obtaining a user group table configured by a user, the user group table including multiple users and at least one user group associated with each user among the multiple users; and according to the at least one user group associated with each user in the user group table, processing each group member of each user group among multiple user groups including the at least one user group.

According to an implementation of the present invention, further provided is a nonvolatile machine readable medium storing a program product for managing user groups, the program product including a machine executive instruction enabling a computer system to execute the following steps: obtaining a user group table configured by a user, the user group table including multiple users and at least one user group associated with each user among the multiple users; and according to the at least one user group associated with each user in the user group table, processing each group member of each user group among multiple user groups including the at least one user group.

According to an implementation of the present invention, further provided is a program product stored in a nonvolatile machine readable medium and used for managing user groups, the program product including a machine executive instruction enabling a computer system to execute the following steps: when receiving a request for establishing multiple user groups and basic information of the multiple user groups sent by another server, establishing the multiple user groups; receiving an access request of a terminal for accessing a specified user group in the server; determining whether the specified user group is a user group among the multiple user groups, and if so, forwarding the access request to the another server, so that the another server responds to the access request.

According to an implementation of the present invention, further provided is a nonvolatile machine readable medium storing a program product for managing user groups, the program product including a machine executive instruction enabling a computer system to execute the following steps: when receiving a request for establishing multiple user groups and basic information of the multiple user groups sent by another server, establishing the multiple user groups; receiving an access request of a terminal for accessing a specified user group in the server; determining whether the specified user group is a user group among the multiple user groups, and if so, forwarding the access request to the another server, so that the another server responds to the access request.

According to an implementation of the present invention, further provided is a machine readable program, which enables a machine to execute the user group management method in any above technical solution.

According to an implementation of the present invention, further provided is a storage medium storing a machine readable program, wherein the machine readable program enables a machine to execute the user group management method in any above technical solution.

Only preferred embodiments of the present invention are described above, but the present invention is not limited thereto. Various modifications and alterations may be made to the present invention for those skilled in the art. Any modifications, equivalent substitutions, improvements and the like made within the spirit and principle of the present invention shall fall into the protection scope of the present invention.

## Claims

1. A server, comprising:
an obtaining unit, used for obtaining a user group table configured by a user, wherein the user group table comprises multiple users and at least one user group associated with each user among the multiple users; and
a processing unit, used for processing each group member of each user group among multiple user groups according to the at least one user group associated with each user in the user group table, wherein the multiple user groups comprise the at least one user group.

2. The server of claim 1, wherein the processing unit comprises:
a detection unit, used for detecting whether the user groups associated with each user in the user group table are changed; and
an updating unit, used for updating each group member of the user groups associated with a specified user when the detection unit detects that the user groups associated with the specified user in the user group table are changed.

3. The server of claim 1 or 2, wherein
the user group table further comprises authority information of each user in the user groups associated with the user;
the processing unit is further used for:
according to the authority information of each user in the user groups associated with the user, setting an authority for each group member in each user group.

4. The server of claim 3, further comprising:
an interaction unit, used for sending a request for establishing the multiple user groups to another server, and sending basic information of the multiple user groups to the another server, so that the multiple user groups are managed by the another server.

5. The server of claim 4, wherein
the interaction unit is used for:
receiving an access request, forwarded by the another server, of a terminal for accessing a specified user group in the multiple user groups, and sending a response result of a response unit with regard to the access request to the another server, so that the response result is sent to the terminal by the another server; and
the response unit is used for responding to the access request received by the interaction unit.

6. The server of claim 5, further comprising:
a determining unit, used for determining whether the user corresponding to the terminal has an authority of accessing the specified user group;
the response unit is specifically used for: when the determining unit determines that the user corresponding to the terminal has the authority of accessing the specified user group, authorizing the terminal and returning data accessed by the terminal, and when the determining unit determines that the user corresponding to the terminal does not have the authority of accessing the specified user group, returning access failure information.

7. A server, comprising:
an interaction unit, used for receiving a request for establishing multiple user groups and basic information of the multiple user groups sent by another server, and
receiving an access request of a terminal for accessing a specified user group in the server, and forwarding the access request to the another server when a determining unit determines that the specified user group is a user group in the multiple user groups, so that the another server responds to the access request;
an establishment unit, used for establishing the multiple user groups according to the request received by the interaction unit for establishing the multiple user groups; and
the determining unit, used for determining whether the specified user group is a user group among the multiple user groups.

8. The server of claim 7, wherein the interaction unit is further used for: receiving a response result of the another server with regard to the access request, and sending the response result to the terminal.

9. A user group management method, comprising:
obtaining a user group table configured by a user, wherein the user group table comprises multiple users and at least one user group associated with each user among the multiple users; and
according to the at least one user group associated with each user in the user group table, processing each group member of each user group among multiple user groups, wherein the multiple user groups comprise the at least one user group.

10. The user group management method of claim 9, wherein the step of processing each group member of each user group among multiple user groups comprising the at least one user group according to the at least one user group associated with each user in the user group table comprises:
detecting whether the user groups associated with each user in the user group table are changed; and when that the user groups associated with a specified user in the user group table are changed is detected, updating each group member of the user groups associated with the specified user.

11. The user group management method of claim 9 or 10, wherein
the user group table further comprises authority information of each user in the user groups associated with the user;
the user group management method further comprises:
according to the authority information of each user in the user groups associated with the user, setting an authority for each group member in each user group.

12. The user group management method of claim 11, further comprising:
sending a request for establishing the multiple user groups to another server; and
sending basic information of the multiple user groups to the another server, so that the another server manages the multiple user groups.

13. The user group management method of claim 12, further comprising:
receiving an access request, forwarded by the another server, of a terminal for accessing a specified user group in the multiple user groups, and responding to the access request; and
sending a response result of the access request to the terminal.

14. The user group management method of claim 12, further comprising:
receiving an access request, forwarded by the another server, of a terminal for accessing a specified user group in the multiple user groups, and responding to the access request; and
sending a response result of the access request to the another server, so that the another server sends the response result to the terminal.

15. The user group management method of claim 13 or 14, wherein responding to the access request specifically comprises:
determining whether the user corresponding to the terminal has an authority of accessing the specified user group; if the user corresponding to the terminal has the authority of accessing the specified user group, authorizing the terminal and returning data accessed by the terminal; otherwise, returning access failure information.

16. A user group management method, comprising:
when receiving a request for establishing multiple user groups and basic information of the multiple user groups sent by another server, establishing the multiple user groups;
receiving an access request of a terminal for accessing a specified user group in the server;
determining whether the specified user group is a user group among the multiple user groups, and if so, forwarding the access request to the another server, so that the another server responds to the access request.

17. The user group management method of claim 16, further comprising: receiving a response result of the another server with regard to the access request, and sending the response result to the terminal.
